# EUROPEAN PATENT APPLICATION

(11) **EP 4 641 876 A1**
(43) Date of publication of application: **29.10.2025**
(21) Application number: 24172795.7
(22) Date of filing: 26.04.2024
(51) Int. Cl.: H02J 7/00

(54) **SECURED MODIFICATION OF BATTERY PACK PARAMETERS**

(71) Applicant: VOLVO TRUCK CORPORATION, 405 08 Göteborg (SE)
(72) Inventor: RAY, Dripta, 412 76 GÖTEBORG (SE); SVENSSON, Martin, 415 13 GÖTEBORG (SE)
(74) Representative: Kransell & Wennborg KB

(57) **Abstract**

A computer system (100) is provided, including processing circuitry (110) configured to obtain indications of voltages (*Vᵢ*) at a plurality of connector pins and/or sockets of a physical port for connecting a diagnostics tool (140) to a battery pack (150) or battery management unit (BMU, 160) for the battery pack; determine, based on the indications, that the voltages applied match a predefined voltage pattern; and, in response to the determining, authorize the diagnostics tool to modify one or more parameter values of the battery pack. A corresponding battery pack, BMU, energy storage system (ESS), heavy-duty electric vehicle, device and diagnostics tool are also provided.

## Description

### TECHNICAL FIELD

The disclosure relates generally to battery packs as used in e.g. an Energy Storage System (ESS), for example in electric vehicles. In particular aspects, the disclosure relates to secured modification of battery pack parameters. The disclosure can be applied to heavy-duty vehicles, such as trucks, buses, and construction equipment, among other vehicle types. Although the disclosure may be described with respect to a particular vehicle, the disclosure is not restricted to any particular vehicle, and applies also to ESS's as found outside of vehicles, such as in e.g. industrial or home applications.

### BACKGROUND

An electric Energy Storage System (ESS) often includes multiple battery packs that are each or jointly controlled by an Electronic Control Unit (ECU) often referred to as a Battery Management Unit (BMU). The BMU controls, monitors and for example reports faults in the battery packs. An ESS is for example provided as part of an electric vehicle, such as a heavy-duty electric vehicle.

A battery pack may include Non-Volatile Memory (NVM), in which one or more parameters needed for control and/or identification of the battery pack may be stored. Such a NVM may also be responsible for logging of e.g. certain safety-related diagnostic faults.

Communication with the BMU may for example take place using Unified Diagnostics Services (UDS) or similar diagnostic communication protocols. Some parameters of a battery pack are open for writing via UDS, meaning that they may be modified by an operator with the help of a diagnostics tool supporting e.g. the UDS protocol.

As some of the battery pack parameters may be critical to the legal identification, function, safe operation and/or lifetime (degradation) of the battery pack, there is a desire to prevent unauthorized modification/alteration (e.g. modification-jobs) of such parameters in the NVM of the battery pack. Examples of such critical parameters may include Date of Manufacture (DoM), Part Number (PN), Serial Number (SN), Battery Identification Number (BIN), and similar.

In addition to the above, how the battery pack and/or BMU reacts to certain diagnostic faults (as indicated by one or more Diagnostic Trouble codes, DTCs) may be crucial to ensure safe operation of the ESS. For example, hazardous events such as thermal propagation or unwanted current, temperature and/or voltage limit violations during charging and/or discharging of the ESS can be mapped to respective DTCs and then reported by the BMU. The respective DTCs may have safety-related actions associated with them, such as for example permanent opening of contactors or similar to prevent further damage/risks. Clearing of such faults by using a diagnostics tool is thus preferably allowed only in a controlled environment, such as in a workshop or other professional setup. Access to routines to clear such faults are however necessary in case of false positives and/or repairing, replacing or remanufacturing of battery packs.

In light of the above, there is therefore a need to control access to such critical modification-jobs and/or routines.

### SUMMARY

According to a first aspect of the disclosure, there is provided a computer system including processing circuitry configured to: - obtain indications of a plurality of voltages at a plurality of connector pins and/or sockets of a physical port for connecting a diagnostics tool to a battery pack or battery management unit (BMU) of/for the battery pack; - determine, based on these indications, that the voltages applied at the connector pins and/or sockets matches a predefined voltage pattern; and, in response to such determining, authorize the diagnostics tool to modify one or more parameter values of the battery pack. The first aspect of the disclosure may seek to solve the problem of how to control access to modification of parameters and/or to critical routines of the battery pack, by using the pins and/or sockets of the physical port to indicate a "PIN-code"-like voltage pattern in order to authorize the diagnostics tool. A technical benefit may include that authorization may thus be performed using simple, non-complex means and possibly without having to modify any hardware of e.g. the physical port or similar, as the pins and/or sockets are already available for other purposes (such as subsequent communication between the diagnostics tool and the battery pack and/or BMU). If the correct voltage pattern is not presented, the battery pack and/or BMU may e.g. refuse access for the diagnostics tool, and prevent the diagnostics tool from modifying (critical) parameters of the battery pack. As used herein, "modifying one or more parameters of the battery pack" is also envisaged to include e.g. clearing (or setting) one or more DTCs and similar. As also envisaged herein, modifying the one or more parameters may include executing one or more routines, e.g. one or more routines provided by the BMU.

Optionally in some examples, including in at least one preferred example, the predefined voltage pattern may include a first subset of the connector pins and/or sockets corresponding to logical high, and another subset of the connector pins and/or sockets corresponding to logical low. A technical benefit may include that the PIN-code-like voltage pattern may thus be provided using already available hardware, by controlling the voltages delivered at each pin and/or socket using e.g. software only.

As envisaged herein, the predefined voltage pattern may be static in time (i.e. constant/stationary), in which only the voltage amplitude applied on each connector pin may be important for the authorization procedure. In other envisaged examples, the predefined voltage pattern may be a non-static pattern (i.e. non-stationary), such that the diagnostics tool must present a predefined sequence of time-varying voltages. For example, it may be envisaged that the diagnostics tool is required to apply voltages with predefined frequencies, amplitudes, and/or relative phase differences at each connector pin in order to authorize the diagnostics tool. As another example, one or more parameters of such voltages may be required, in order to authorize the diagnostics tool, to vary according to a predefined pattern. For example, it may be required that a frequency, amplitude, phase or similar of a voltage signal applied at a particular connector pin varies with time in accordance with a predefined pattern. As generally envisaged herein, that the voltages are in accordance with a predefined voltage pattern is not the same as e.g. the voltages being varied in accordance with some predefined communication protocol in order to e.g. transfer a particular command, text string or similar. It is envisaged that the connector pins may however be used for such a purpose when they are not used to authorize the diagnostics tool.

Optionally, in some examples, including in at least one preferred example, the predefined voltage pattern may include a first subset of the connector pins and/or sockets having a voltage below a first threshold voltage and above a second threshold voltage, and a second subset of the connector pins and/or sockets having a voltage below a third threshold voltage and above a fourth threshold voltage, wherein the third threshold voltage equals or is lower than the second threshold voltage. A technical benefit may include that a pin and/or socket does not need to match an exact voltage in order to present e.g. a high or a low, but may instead be allowed to vary within certain limits, and in that e.g. the various threshold voltages may be defined such that a connector pin and/or socket being pulled to zero volt or e.g. up to a rail voltage does not count as the connector pin and/or socket being either logical high or low.

Optionally, in some examples, including in at least one preferred example, the processing circuitry may be further configured to trigger, in response to or in conjunction with the determining, a pseudo-fault in the battery pack and/or BMU. A technical benefit may include that an already available fault-logging system of the battery pack and/or BMU can thus be used to detect that the diagnostics tool was authorized by presenting the correct voltage pattern, and/or to track any modifications of one or more parameter values then made by the diagnostics tool.

Optionally, in some examples, including in at least one preferred example, the triggering may include logging the pseudo-fault to an online database, such as to a remote server (e.g. a cloud server, a server operated by the manufacturer of the battery packs, by a fleet manager, by a manufacturer of the vehicle, or similar). A technical benefit may include that the logs may thus be kept safe even if e.g. the battery pack or BMU is damaged, and/or that redundancy may be achieved by storing the information at multiple places. Another technical benefit may include that e.g. a fleet manager or manufacturer can keep track, in e.g. real-time, what happens to the battery packs in terms of parameter modifications and similar.

Optionally, in some examples, including in at least one preferred example, the processing circuitry may be further configured to cause a logging of i) (the) one or more modifications to the one or more parameter values made by the diagnostics tool and/or ii) an outcome of attempting the one or more modifications (such as an outcome of attempting to execute one or more routines for such modifications, such as a write-routine, a clear-DTC-routine, or similar). A technical benefit may include that it may be possible to detect e.g. unauthorized parameter manipulation, especially if the pseudo-fault triggered by the diagnostics device presenting the voltage pattern is also logged. Data analytics pattern may be used to automatically detect and warn of such unauthorized parameter manipulation, and/or to e.g. detect human error wherein for example a wrong parameter was modified by mistake, and similar. Having logged the modifications and/or outcome thereof, and/or the triggered pseudo-fault, may help to detect if the process becomes compromised by a third-party, and similar. It may be useful to e.g. log changes to BoL-parameters that are not supposed to be modified, such as the date of manufacture, serial number, and similar, of the battery pack.

Optionally, in some examples, including in at least one preferred example, to determine that the voltages applied at the connector pins and/or sockets matches a predefined voltage pattern may include using a truth table. A technical benefit may include that such truth tables are easy to implement using e.g. software, and that whether the correct voltage pattern has been applied can be checked easily by comparing against such a truth table.

Optionally, in some examples, including in at least one preferred example, the one or more parameters may include one or more generic identification parameters and/or Beginning of Life (BoL) -parameters of the battery pack. A BoL-parameter may be a parameter written only once during the lifetime of the battery, such as e.g. a date of manufacturing, a part number, a serial number, a battery identification number, or similar. Optionally, in some examples, including in at least one preferred example, the one or more parameters may instead, or in addition, be indicative of one or more diagnostic trouble/fault codes (such as one or more DTCs) of the battery pack. For example, the one or more parameters may correspond to a DTC or similar. A technical benefit may include that such parameters may be particularly critical to ensure safe operation and/or lifetime of the battery pack, and that preventing unauthorized modifications of such parameters may thus be prevented using the proposed solution.

Optionally, in some examples, including in at least one preferred example, the computer system may be part of (or form) the BMU of the battery pack. A technical benefit may include that no further circuitry is required to be added to the battery pack, and that the already existing BMU can be adapted such that its processing circuitry performs the proposed solution also.

According to a second aspect of the present disclosure, there is provided a battery pack, including a physical port with a plurality of connector pins and/or sockets for connecting a diagnostics tool to the battery pack, and the computer system of the first aspect (or any example thereof disclosed and discussed herein).

According to a third aspect of the present disclosure, there is provided a Battery Management Unit (BMU) for a battery pack, including a physical port with a plurality of connector pins and/or sockets for connecting a diagnostics tool to the BMU, and the computer system of the first aspect (or any example thereof disclosed and discussed herein).

According to a fourth aspect of the present disclosure, there is provided an Energy Storage System (ESS), including at least one battery pack, a physical port with a plurality of connector pins and/or sockets for connecting a diagnostics tool (such as a diagnostics tool for a battery pack and/or for a BMU), and the computer system of the first aspect (or any example thereof disclosed and discussed herein).

According to a fifth aspect of the present disclosure, there is provided a heavy-duty electric vehicle, including at least one battery pack, a physical port with a plurality of connector pins and/or sockets for connecting a diagnostics tool to the at least one battery pack or to a BMU for the battery pack, and the computer system of the first aspect (or any example thereof disclosed and discussed herein).

According to a sixth aspect of the present disclosure, there is provided a device for authorizing a diagnostics tool to a battery pack or to a BMU for the battery pack, including: - a physical connector for connecting the device to a physical port of a battery pack or of a BMU for the battery pack, wherein the physical connector includes a plurality of connector pins and/or sockets; and circuitry configured to provide, as part of authorizing the diagnostics tool to modify one or more parameter values of the battery pack, voltages at the plurality of connector sockets and/or pins in accordance with a predefined voltage pattern.

Optionally, in some examples, including in at least one preferred example, the device may be further configured to be interconnected between i) the physical port of the battery pack or of the BMU and ii) the diagnostics tool. The device may for example be a cabling harness connectable between the battery pack/BMU and the diagnostics tool. A technical benefit may include that no modifications to the diagnostics tool may be required, as the interconnectable device may provide the functionality required to present the correct voltage pattern.

According to a seventh aspect of the present disclosure, there is provided a diagnostics tool for a battery pack or BMU for the battery pack, including the device of the sixth aspect (or any example thereof disclosed and discussed herein).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** schematically illustrates various examples of a computer system according to the present disclosure.
**FIGS. 1B** and **1C** schematically illustrate various example physical connectors for a battery pack, BMU and/or diagnostics device according to the present disclosure.
**FIG. 1D** schematically illustrates an example voltage pattern for authorizing a diagnostics tool according to the present disclosure.
**FIG. 2** schematically illustrates a flowchart of various examples of a method of authorizing a diagnostics tool according to the present disclosure.
**FIG. 3** schematically illustrates an example energy storage system according to the present disclosure.
**FIG. 4** schematically illustrates an example heavy-duty vehicle according to the present disclosure.
**FIG. 5A** schematically illustrates a device for interconnection between a battery pack/BMU and diagnostics tool according to the present disclosure;
**FIG. 5B** schematically illustrates an example diagnostics tool according to the present disclosure.
**FIG. 6** schematically illustrates an example computer system for implementing examples disclosed herein, according to the present disclosure.

### DETAILED DESCRIPTION

The detailed description set forth below provides information and examples of the disclosed technology with sufficient detail to enable those skilled in the art to practice the disclosure. The present disclosure sets out to solve the problem of how to authorize a diagnostics tool to modify one or more parameters of a battery pack, as will now be described in more detail with reference to the accompanying drawings.

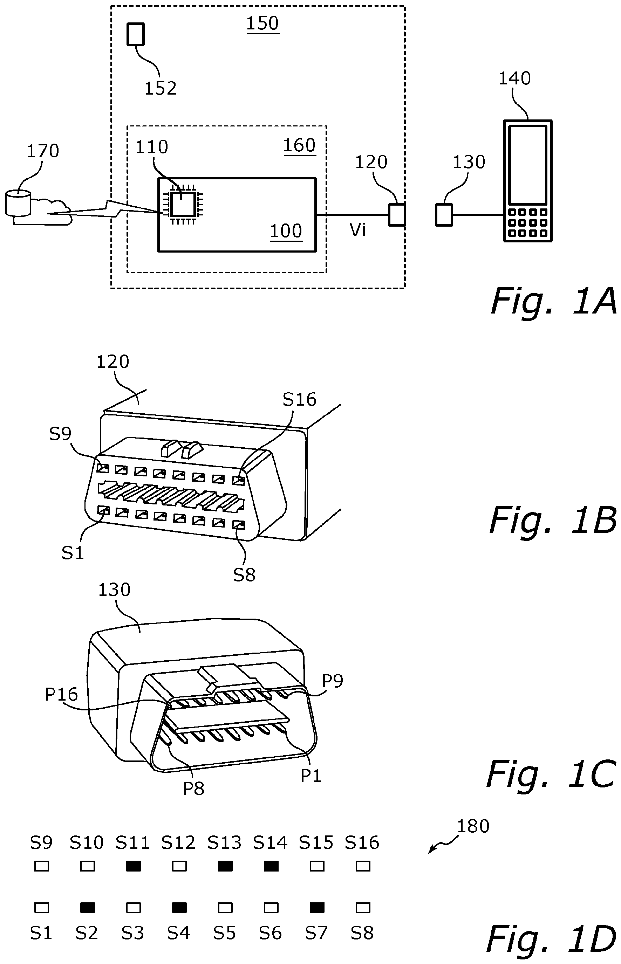

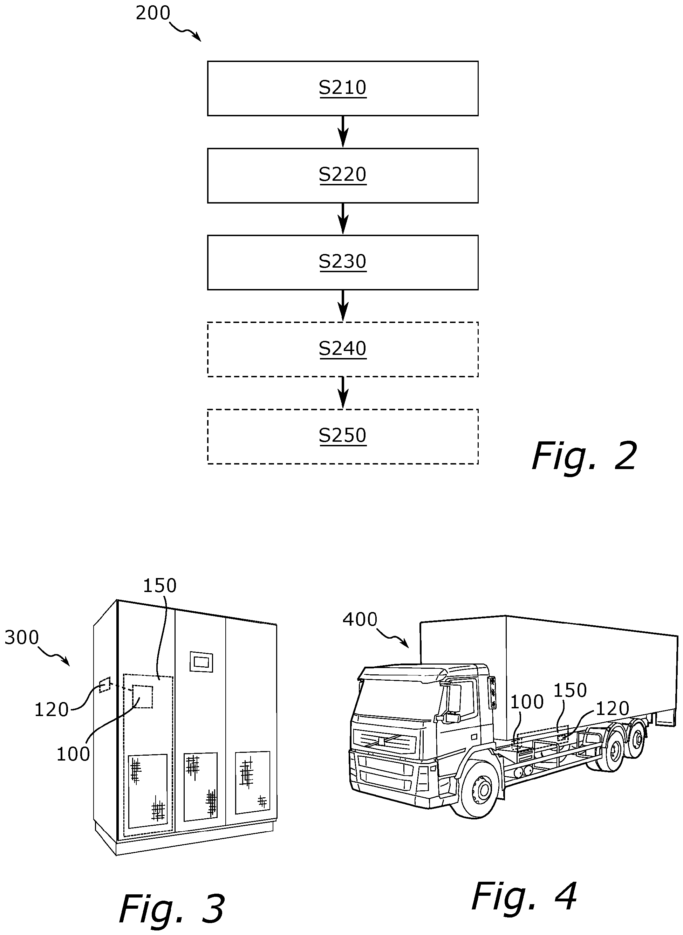

**FIG. 1A** schematically illustrates various examples of a computer system 100 as envisaged herein. **FIG. 2** schematically illustrates a flowchart of various examples of a method 200 performed by such a computer system 100 in order to authorize a diagnostics tool to modify one or more parameters of a battery pack.

The computer system 100 includes processing circuitry 110, that is configured to obtain (as part of e.g. an operation S210 of the method 200) a plurality of voltages *Vᵢ* (where *i* ∈ [1, *N*] is an integer and *N* a total number of such voltages) at a plurality of connector pins and/or sockets of a physical port 120 for connecting a diagnostics tool 140 to a battery pack 150 and/or to a Battery Management Unit (BMU) 160 for the battery pack. As envisaged herein, a same BMU may be responsible for multiple battery packs. The diagnostics tool 140 may for example be connected to the physical port 120 via its own connector (physical port) 130.

The processing circuitry 110 is further configured to determine (as part of e.g. an operation S220 of the method 200), based on the indications of the voltages *Vᵢ*, that the voltages applied at the connector pins and/or sockets of the physical port 120 matches a predefined voltage pattern.

The processing circuitry 100 is further configured to, in response to determining that the applied voltages *Vᵢ* matches the predefined voltage pattern, authorize (as part of e.g. an operation S230 of the method 200) the diagnostics tool 140 to modify one or more parameter values of the battery pack 150. The values of such parameters may be stored in a non-volatile memory 152 included as part of the batter pack 150, and it is envisaged that the processing circuitry 110 may communicate with the memory 152 to update the parameter values stored therein, e.g. by communication directly with the memory 152 or with some entity of the battery pack 150 (such as the BMU 160) that is communicatively coupled to the memory 152.

**FIG. 1B** schematically illustrates an example physical port/connector 120 of the battery pack 150 and/or BMU 160, herein in form of female (type A) On-Board Diagnostics (OBD)-II connector. As envisaged herein, the physical port 120 may of course be of any type suitable for connecting the diagnostics tool 140 to the battery pack 150 and/or BMU 160. In particular, the connector 120 has a plurality of connector sockets S1-S16 that are configured to receive corresponding connector pins of a matching male connector, such as a matching male (type A) OBD-II connector.

**FIG. 1C** schematically illustrates an example physical port/connector 130 of the diagnostics tool 140, here in form of a male (type A) OBD-II connector. As envisaged herein, the physical port/connector 130 may of course be of any type suitable for connecting to the physical port 120 of the battery pack 150 and/or BMU 160. In particular, the connector 130 has a plurality of connector pins P1-P16 that are configured to mate with the corresponding connector sockets S1-S16 of the physical connector 120 of the battery pack and/or BMU 160, thereby allowing the diagnostics tool 140 to communicate with the battery pack 150 and/or BMU 160. As envisaged herein, it may of course be the other way around, such that the physical port 120 is male and includes a plurality of connector pins and such that the physical port 130 is female and includes a plurality of connector sockets, or e.g. such that there is a mix of both connector pins and sockets on the physical port 120 and a matching mix of both sockets and pins on the physical port 130, and similar. There may of course also be a different number of connector pins and/or sockets than the 16 shown in each of FIGS. 1B and 1C. In what follows, it will however be assumed (as an example only) that the physical port 120 is as illustrated in FIG. 1B and that e.g. the corresponding physical port 130 of the diagnostics device is as illustrated in FIG. 1C.

In particular, the processing circuitry 110 of the computer system 100 is configured to obtain readings of what voltages *Vᵢ* that are applied on the connector sockets S1-S16, where *V*₁ is the voltage applied at socket S1, *V*₂ the voltage applied at socket S2, and so on, i.e. such that *Vᵢ* denotes the voltage applied at socket Si. As part of the operation S220 of the method 200, the processing circuitry 110 is configured to check whether each applied voltage *Vᵢ* matches a corresponding predefined voltage, and whether all applied voltages *Vᵢ* thus matches a corresponding predefined voltage pattern. For example, a predefined voltage pattern may be defined as a plurality of voltage values *Uᵢ*, and the processing circuitry 110 may be configured to check whether, for each i ∈ [1, *N*], there is a voltage match such that *Vᵢ = Uᵢ* for all *i*. As used herein, that a voltage "matches" a predefined voltage may not necessarily include that the voltage is exactly equal to a specific voltage, but e.g. only that the voltage lies within predefined limits. For example, the processing circuitry 110 may check whether a voltage *Vᵢ* is below or above a predefined first threshold value *V*_{*t*1}, and decide that the voltages *Vᵢ* is in accordance with a predefined voltage pattern if a specific first subset of the connector sockets S1-S16 has voltages that are below *V*_{*t*1} and a second, disjoint second subset of the connector sockets S1-S16 has voltages that are above *V*_{*t*1}, or vice versa. Other examples of how to define the predefined voltage pattern are also envisaged.

For example, a predefined voltage pattern may be defined as requiring that the first subset of the connector socket voltages is above the first threshold *V*_{*t*1}, and that the second subset of the connector socket voltages is below a second threshold *V*_{*t*2} that is smaller than *V*_{*t*1}. Another example includes that the first subset of the connector socket voltages are within an interval [*V*_{*t*2}, *V*_{*t*1}], and that the second subset of the connector socket voltages are outside the interval [*V*_{*t*2}, *V*_{*t*1}], and similar. As yet another example, a predefined voltage pattern may require for the first subset of voltages to be within a first interval [*V*_{*t*2}, *V*_{*t*1}] and the second subset of voltages to be within a second interval [*V*_{*t*4}, *V*_{*t*3}].

The predefined voltage pattern may also be defined in terms of the connector socket voltages being either pulled high or pulled low, e.g. in terms of whether each connector socket corresponds to a logical high or low, e.g. "1" or "0". Referring back to the previous paragraph, a logical high may e.g. correspond to a voltage exceeding the first threshold *V*_{*t*1} and a logical low may e.g. correspond to a voltage being below the first threshold *V*_{*t*1}, or vice versa. As yet another example, a logical high may correspond to a voltage being within the interval [*V*_{*t*2}, *V*_{*t*1}] and a logical low may correspond to a voltage being within the interval [*V*_{*t*4}, *V*_{*t*3}], where *V*_{*t*4} *< V*_{*t*3} ≤ *V*_{*t*2} < *V*_{*t*1}. As yet another example, a logical high may correspond to a voltage being above *V*_{*t*1}, while a logical low may correspond to a voltage being below *V*_{*t*2} *< V*_{*t*1}. For example, a logical high may be defined as a voltage being above *V*_{*t*4} = 1.9V and below *V*_{*t*3} = 3.1V, while a logical low may be defined as a voltage being above *V*_{*t*2} = 0.93V and below *V*_{*t*1} = 1.9V, or similar. In some examples, voltages being outside of such two intervals may be defined as short-to-high and short-to-low, and e.g. voltages pulled low (to 0V) or pulled high (to e.g. a rail voltage, e.g. above 3.1V in the previous example) may be defined as not being either logical high or logical low.

As envisaged herein, the predefined voltage pattern may thus be defined in many different ways, as long as the voltage pattern is not trivial to e.g. guess and corresponds to only one of many possible voltage patterns. Phrased differently, the predefined voltage pattern is, as envisaged herein, to be defined such that it corresponds to a particular "PIN-code" out of many possible such PIN-codes, which makes it hard for e.g. a malicious party to guess the correct voltage values for each connector socket in order to become authorized by the processing circuitry 110.

**FIG. 1D** schematically illustrates an example of a predefined voltage pattern 180, out of many different possible such patterns. Here, it is required that a first subset of connector sockets (corresponding to sockets S2, S4, S7, S11, S13 and S14) is such that the corresponding voltages are logical high, and that a second subset of connector sockets (corresponding to sockets S1, S3, S5, S6, S8, S9, S10, S12, S15 and S16) is such that the corresponding voltages are logical low. For example, it may be required that *Vᵢ* ∈ [*V*_{*t*2}, *V*_{*t*1}] for *i* ∈ *S*₁ = {2, 4, 7, 11, 13, 14} and that *Vᵢ* ∈ [*V*_{*t*4}, *V*_{*t*3}] for *i* ∈ *S*₂ = {1, 3, 5, 6, 8, 9, 10, 15, 16}, where *S*₁ and *S*₂ denotes the first and second subset of connector sockets, respectively. As another example, it may be required that e.g. *Vᵢ* > *V*_{*t*1} for *i* ∈ *S*₁ and that *Vᵢ* < *V*_{*t*1} for *i* ∈ *S*₂, or vice versa. The voltage pattern 180 does of course only correspond to one out of many possible voltage patterns, and exactly how to decide whether a particular socket is currently "logical high" or "logical low" may, as described earlier herein, be done in many different ways.

In some examples, after having converted each connector socket voltage to either logical high, logical low and possibly neither logical high or low (such as e.g. pulled to zero or pulled to rail), a truth table may be used in order to check whether the voltages correspond to the predefined voltage pattern. For example, assuming only six connector sockets in total to avoid cluttering, such a truth table may partially be defined as illustrated in Table 1. In Table 1, "1" means logical high, "0" means logical low, and "X" means neither logical high nor low.

**Table 1.**

| **S1** | **S2** | **S3** | **S4** | **S5** | **S6** | **Authorize** |
|---|---|---|---|---|---|---|
| **...** | **...** | **...** | **...** | **...** | **...** | **...** |
| **1** | **0** | **0** | **0** | **1** | **0** | **Yes** |
| **1** | **0** | **0** | **0** | **1** | **X** | **No** |
| **1** | **0** | **0** | **0** | **0** | **0** | **No** |
| **...** | **...** | **...** | **...** | **...** | **...** | **...** |

It should be noted that other voltage patterns may be used for other purposes of the battery pack and/or BMU not related to authorization. The truth table may thus e.g. include one or more particular voltage patterns that are reserved for authorization purposes, and upon matching the connector socket voltages *Vᵢ* against such a reserved pattern the processing circuitry 110 may proceed with the authorization. The truth table may e.g. be stored as part of the memory 152, and/or e.g. as part of the computer system 100 (in e.g. a suitable memory included therein for this purpose).

In some examples, when a predefined voltage pattern (reserved for authorization purposes) is matched, the processing circuitry may be configured to trigger a pseudo-fault in the battery pack and/or BMU, which can be logged using e.g. a fault-logging method/system already available for logging of other faults. Matching of the predefined voltage pattern may also cause the battery pack 150 and/or BMU 160 (via the computer system 100) to enter a dedicated secure "write-mode" in which the diagnostics tool 140 is allowed to modify (i.e. write) to the one or more critical parameters of the battery pack 150.

In some examples, such a pseudo-fault may also be logged to an external/online database (such as a cloud service) 170, with which the processing circuitry 110 may be configured to communicate.

In some examples, in response to matching the predefined voltage pattern, the processing circuitry may be configured to log the changes to the one or more parameters, and/or to log an outcome of an attempt to make such changes. For example, modifying the one or more parameters may include executing a particular routine within the computer system 100, and the processing circuitry 110 may be configured to log an outcome of such a routine (e.g. whether the routine failed, was successful, and/or e.g. the changes made by the routine). By logging e.g. the pseudo-fault and e.g. when a write-routine was executed, data analytics patterns may be used to automatically detect and warn of e.g. unauthorized parameter manipulation.

In some examples, the processing circuitry 110 may be configured to log the changes made and/or outcome of e.g. one or more routines executed as part of such modifications to the remote database/cloud service 170.

As an example of an envisaged authorization process, the following operations may be performed:
1. A particular voltage pattern is presented to the processing circuitry 110 by applying voltages accordingly at the connector sockets S1-S16 of the physical connector 120 of the battery pack 150 and/or BMU 160. Such a particular voltage pattern may e.g. be configured by a manufacturer by an electric vehicle in which the computer system 100 is to be used, or e.g. be provided as part of a special harness for interconnecting a diagnostics tool to the battery pack 150 and/or BMU 160, or similar. It is also envisaged that the voltage pattern to use may be communicated to the computer system 100 via e.g. the internet from a remote location, and/or be presented to the computer system 100 via e.g. a removable storage device such as an USB driver or similar. In particular, it may be desirable that such voltage patterns are only provided to authorized workshops and/or operation facilities and not to anyone.
2. Once the processing circuitry 110 determines that the applied voltage pattern matches a predefined voltage pattern reserved for authorization purposes, the computer system 100 enters a "secured write mode" and triggers a pseudo-fault (e.g. by issuing a particular DTC).
3. The diagnostics tool 140 is now enabled to e.g. run a parameter-write routine, a clear-DTC routine, or similar.
4. If the routine is successful, the outcome thereof is logged and stored e.g. in the external/online database 170.
5. Data analytics can then be used to trigger warnings via predefined patterns to detect e.g. unauthorized events, in case e.g. the authorization process has been compromised by a third-party, e.g. by the third-party having gained knowledge about an acceptable voltage pattern.

As envisaged herein, the proposed solution provides several advantages. First, it is easy to implement as it may require only software modifications of e.g. a BMU in order for the BMU to check the voltages applied at the physical connector as part of an authorization process. The solution is also capable of preventing, or at least mitigating, human error, as e.g. erroneous parameter modifications made with good intent may be detected and perhaps corrected. The solution is also capable of preventing, or at least mitigating, e.g. cyber threats by malicious third-parties, as unauthorized attempts at modifying critical battery pack parameter values may be detected via the triggered pseudo-faults and logging of routine execution outcomes, and similar. By restricting access to e.g. a diagnostic tool and/or harness capable of presenting the correct voltage patterns only to selected facilities, more control of who are to modify, and when to modify, critical battery pack parameters may be obtained.

As envisaged herein, one or more critical parameters of a battery pack may include a date of manufacture, part number, serial number, battery identification number, and/or e.g. indications of one or more diagnostic fault/trouble codes, and similar.

As envisaged herein, in some examples, the computer system 100 may for example form part of the battery pack 150, or form part of the BMU 160.

Thus, the present disclosure also envisages to provide the battery pack 150 with the physical port 120 for connecting the diagnostics tool 140, and the computer system 100.

Likewise, the present disclosure also envisages to provide the BMU 160 with the physical port 120 for connecting the diagnostics tool 140, and the computer system 100.

The present disclosure also envisages to provide an energy storage system (ESS).

**FIG. 3** schematically illustrates an example energy storage system (ESS) 300, here in form of a battery bank configured to deliver (or receive) energy to (or from) a power grid, as part of e.g. a backup- and/or ancillary service. The battery bank and energy storage system 300 includes at least one battery pack 150, a physical port 120 for connecting a diagnostics tool to the at least one battery pack 150, and the computer system 100 as described earlier herein. The ESS 300 may for example be installed as part of the power grid itself, and/or be provided e.g. as part of a building or similar. The ESS 300 may for example one or more battery packs that have been harvested from e.g. an electric vehicle, representing so-called "second use" wherein e.g. battery packs that are no longer considered useful in electric vehicles (due to e.g. sufficient aging/degradation) may still be used in other, less demanding applications, such as home energy storage solutions, off-grid solutions, grid solutions, and similar. In particular, the ESS 300 serves to illustrate that a computer system as envisaged herein is not necessarily usable only in (heavy-duty) electric vehicles, but may find use in any situation in which there is one or more battery packs and wherein diagnostic access to such battery packs is needed, with an additional need to control access to such diagnostics in a suitable way.

The present disclosure also envisages to provide a (heavy-duty) electric vehicle.

**FIG. 4** schematically illustrates an example heavy-duty electric vehicle 400 in form of a truck. The vehicle 400 includes at least one battery pack 150, a physical port 120 for connecting a diagnostics tool to the vehicle 400 and battery pack 150 (or to a BMU for the battery pack), and the computer system 100 as described earlier herein. Although illustrated herein using a truck 400, a "vehicle" as envisaged herein may be any type of electric vehicle, not necessarily limited to road vehicles. The same solution, including the use of the computer system 100, may e.g. be used in electric marine vessels, electric airplanes, or in any vehicle and/or vessel in which one or more battery packs are used to power an electric propulsion of the vehicle.

The present disclosure also envisages to provide a device for authorizing a diagnostics tool to a battery pack or to a BMU for the battery pack.

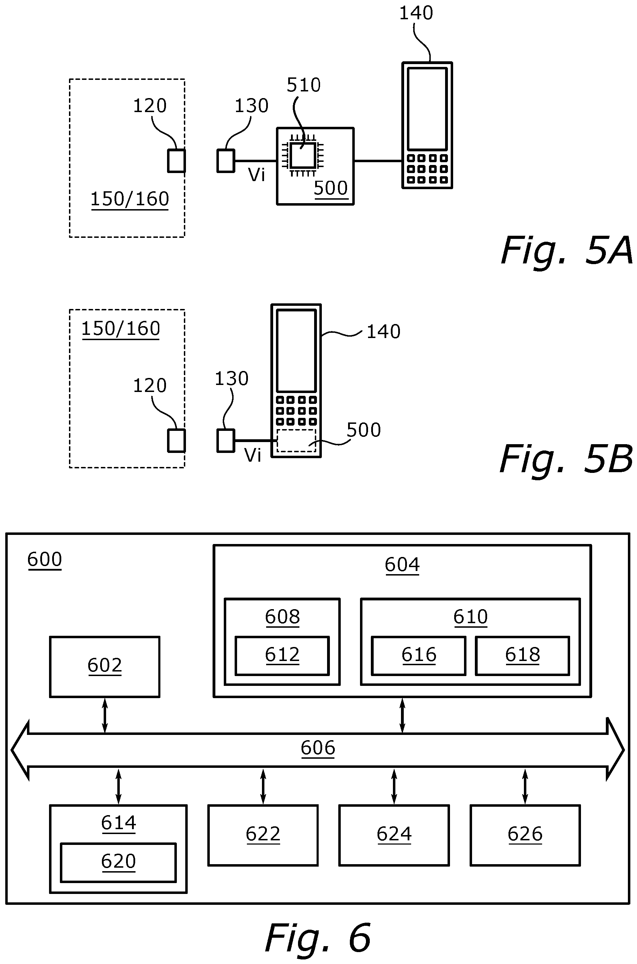

**FIG. 5A** schematically illustrates an example such device 500. The device 500 includes a physical connector 130 for connecting the device 500 to a physical port 120 of a battery pack 150 and/or BMU 160, wherein the physical connector 130 includes a plurality of connector sockets and/or pins as described earlier herein, matching those of the physical connector 120 of the battery pack 150 and/or BMU 160. The device 500 further includes circuitry 510 (that may e.g. be processing circuitry) that is configured to provide, as part of authorizing a diagnostics tool 140 to modify one or more parameter of the battery pack 150, voltages *Vᵢ* at the plurality of connector sockets and/or pins in accordance with a predefined voltage pattern. Phrased differently, the device 500 enables the diagnostic tool 140 to authorize itself, as the battery pack 150 and/or BMU 160 is expected to include the computer system 100 as described earlier herein, such that the computer system can check the voltage pattern applied using the voltages *Vᵢ*.

The device 500 may e.g. be provided as a harness with which the diagnostics tool 140 can be connected to the physical port 120. In some examples, the functionality of authorization and/or presenting the voltage pattern may thus be provided solely by the device 500, such that modifications of the diagnostics tool 140 are not required for this purpose. In some examples, the device 500 may be used on its own without the diagnostics tool 140 being connected to it. Then, it is envisaged that the device 500 may be used to present the required voltage pattern, after which the device 500 may be removed and the diagnostics tool 140 connected directly to the physical port 120 (preferably within e.g. a limited time frame after the device 500 has presented the correct voltage pattern). In other examples, the device 500 may remain connected in between the physical port 120 and the diagnostic tool 140, and be configured to for example relay signals between the diagnostics tool 140 and the physical port 120 after having presented the correct voltage pattern.

The present disclosure also envisages to provide a diagnostics tool including such a device.

**FIG. 5B** schematically illustrates an example diagnostics tool 140, in which the device 500 is included as part of the diagnostics tool 140. In such an example, there is thus no need for e.g. an interconnecting harness or similar, as the diagnostics tool 140 then includes the circuitry required to on its own present a voltage pattern by modifying the voltages *Vᵢ* applied on the connector pins and/or sockets of the physical port 120 as part of attempting to become authorized to modify one or more parameters of the battery pack 150.

**FIG. 6** is a schematic diagram of a computer system 600 for implementing examples disclosed herein, such as the computer system 100 described with reference to FIG. 1 and/or the device 500 described with reference to FIGS. 5A and 5B. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:
Example 1: A computer system (100) including processing circuitry (110) configured to: - obtain indications of a plurality of voltages (Vi) at a plurality of connector pins (P 1-P 16) and/or sockets (S1-S16) of a physical port (120) for connecting a diagnostics tool (140) to a battery pack (150) or to a battery management unit, BMU, (160) for said battery pack; - determine, based on said indications, that the voltages applied at the connector pins and/or sockets matches a predefined voltage pattern (180), and - in response to said determining, authorize the diagnostics tool to modify one or more parameter values of the battery pack.
Example 2: The computer system of example 1, wherein the predefined voltage pattern includes a first subset of the connector pins and/or sockets (S2, S4, S7, S11, S13, S14) corresponding to logical high, and another subset of the connector pins and/or sockets (S1, S3, S5, S6, S8, S9, S10, S12, S15, S16) corresponding to logical low.
Example 3: The computer system of example 1, wherein the predefined voltage pattern includes a first subset of the connector pins and/or sockets having a voltage below a first threshold voltage and above a second threshold voltage, and a second subset of the connector pins and/or sockets having a voltage below a third threshold voltage and above a fourth threshold voltage, wherein the third threshold voltage equals or is lower than the second threshold voltage.
Example 4: The computer system of any one of examples 1 to 3, wherein the processing circuitry is further configured to trigger, in response to or in conjunction with said determining, a pseudo-fault in the battery pack and/or BMU.
Example 5: The computer system of example 4, wherein said triggering includes logging the pseudo-fault to an online database (170).
Example 6: The computer system of any one of the preceding examples, wherein the processing circuitry is further configured to cause a logging of i) the one or more modifications to the one or more parameter values made by the diagnostics tool and/or ii) an outcome of attempting the one or more modifications to the one or more parameters.
Example 7: The computer system of example 6, wherein said logging of the one or more modifications and/or outcome is at least partially to an online database (170).
Example 8: The computer system of any one of the preceding examples, wherein the one or more parameters include one or more generic identification parameters and/or Beginning of Life, BoL, -parameters, and/or are indicative of one or more diagnostic trouble/fault codes, of the battery pack.
Example 9: The computer system of any one of the preceding examples, wherein the computer system is part of or forms the BMU for the battery pack.
Example 10: A battery pack (150), including a physical port (120) with a plurality of connector pins (P1-P16) and/or sockets (S1-S16) for connecting a diagnostics tool (140) to the battery pack, and the computer system (100) of any one of examples 1 to 9.
Example 11: An energy storage system (300), including at least one battery pack (150), a physical port (120) with a plurality of connector pins (P1-P16) and/or sockets (S1-S16) for connecting a diagnostics tool (140) to the at least one battery pack, and the computer system (100) of any one of examples 1 to 9.
Example 12: A heavy-duty electric vehicle (400), including at least one battery pack (150), a physical port (120) with a plurality of connector pins (P1-P16) and/or sockets (S1-S16) for connecting a diagnostics tool (140) to the at least one battery pack, and the computer system (100) of any one of examples 1 to 9.
Example 13: A device (500) for authorizing a diagnostics tool (140, 600) to a battery pack or to a battery management unit, BMU, for said battery pack, including: - a physical connector (130) for connecting the device to a physical port (120) of a battery pack (150) or of a battery management unit, BMU, (160) for said battery pack, wherein the physical connector includes a plurality of connector sockets (S1-S16) and/or pins (P1-P16), and - circuitry (500) configured to provide, as part of authorizing the diagnostics tool to modify one or more parameter values of the battery pack, voltages (Vi) at the plurality of connector sockets and/or pins in accordance with a predefined voltage pattern (180).
Example 14: The device of example 13, wherein the device is further configured to be interconnected between i) the physical port of the battery pack or of the BMU and ii) the diagnostics tool.
Example 15: A diagnostics tool (140) for a battery pack (150) or battery management unit, BMU, (160) for said battery pack, including the device (500) of example 13.

## Claims

1. A computer system (100) comprising processing circuitry (110) configured to:
- obtain indications of a plurality of voltages (Vi) at a plurality of connector pins (P1-P16) and/or sockets (S1-S16) of a physical port (120) for connecting a diagnostics tool (140) to a battery pack (150) or to a battery management unit, BMU, (160) for said battery pack;
- determine, based on said indications, that the voltages applied at the connector pins and/or sockets matches a predefined voltage pattern (180), and
- in response to said determining, authorize the diagnostics tool to modify one or more parameter values of the battery pack.

2. The computer system of claim 1, wherein the predefined voltage pattern comprises a first subset of the connector pins and/or sockets (S2, S4, S7, S11, S13, S14) corresponding to logical high, and another subset of the connector pins and/or sockets (S1, S3, S5, S6, S8, S9, S10, S12, S15, S16) corresponding to logical low.

3. The computer system of claim 1, wherein the predefined voltage pattern comprises a first subset of the connector pins and/or sockets having a voltage below a first threshold voltage and above a second threshold voltage, and a second subset of the connector pins and/or sockets having a voltage below a third threshold voltage and above a fourth threshold voltage, wherein the third threshold voltage equals or is lower than the second threshold voltage.

4. The computer system of any one of claims 1 to 3, wherein the processing circuitry is further configured to trigger, in response to or in conjunction with said determining, a pseudo-fault in the battery pack and/or BMU.

5. The computer system of claim 4, wherein said triggering includes logging the pseudo-fault to an online database (170).

6. The computer system of any one of the preceding claims, wherein the processing circuitry is further configured to cause a logging of i) the one or more modifications to the one or more parameter values made by the diagnostics tool and/or ii) an outcome of attempting the one or more modifications to the one or more parameters.

7. The computer system of claim 6, wherein said logging of the one or more modifications and/or outcome is at least partially to an online database (170).

8. The computer system of any one of the preceding claims, wherein the one or more parameters comprise one or more generic identification parameters and/or Beginning of Life, BoL, -parameters, and/or are indicative of one or more diagnostic trouble/fault codes, of the battery pack.

9. The computer system of any one of the preceding claims, wherein the computer system is part of or forms the BMU for the battery pack.

10. A battery pack (150), comprising a physical port (120) with a plurality of connector pins (P1-P16) and/or sockets (S1-S16) for connecting a diagnostics tool (140) to the battery pack, and the computer system (100) of any one of claims 1 to 9.

11. An energy storage system (300), comprising at least one battery pack (150), a physical port (120) with a plurality of connector pins (P1-P16) and/or sockets (S1-S16) for connecting a diagnostics tool (140) to the at least one battery pack, and the computer system (100) of any one of claims 1 to 9.

12. A heavy-duty electric vehicle (400), comprising at least one battery pack (150), a physical port (120) with a plurality of connector pins (P1-P16) and/or sockets (S1-S16) for connecting a diagnostics tool (140) to the at least one battery pack, and the computer system (100) of any one of claims 1 to 9.

13. A device (500) for authorizing a diagnostics tool (140, 600) to a battery pack or to a battery management unit, BMU, for said battery pack, comprising:
- a physical connector (130) for connecting the device to a physical port (120) of a battery pack (150) or of a battery management unit, BMU, (160) for said battery pack, wherein the physical connector comprises a plurality of connector sockets (S1-S16) and/or pins (P1-P16), and
- circuitry (500) configured to provide, as part of authorizing the diagnostics tool to modify one or more parameter values of the battery pack, voltages (Vi) at the plurality of connector sockets and/or pins in accordance with a predefined voltage pattern (180).

14. The device of claim 13, wherein the device is further configured to be interconnected between i) the physical port of the battery pack or of the BMU and ii) the diagnostics tool.

15. A diagnostics tool (140) for a battery pack (150) or battery management unit, BMU, (160) for said battery pack, comprising the device (500) of claim 13.
